# EUROPÄISCHE PATENTSCHRIFT

(11) **EP 0 539 672 B1**
(45) Veröffentlichungstag und Bekanntmachung des Hinweises auf die Patenterteilung: **01.03.1995**
(21) Anmeldenummer: 92113753.5
(22) Anmeldetag: 12.08.1992
(51) Int. Cl.: E05D 5/02, F16B 37/04, F16B 43/02

(54) **Beschlag zur Befestigung in einer beidseitig hinterschnittenen Profilnut**
Fitting for fixing in a two sided undercut groove of a member
Ferrure pour fixation dans une rainure d'un profilé rétréci des deux côtés

(30) Priorität: 30.10.1991 DE 9113522 U
(43) Veröffentlichungstag der Anmeldung: 05.05.1993
(73) Patentinhaber: FERCO INTERNATIONAL FERRURES ET SERRURES DE BATIMENT, 57400 Sarrebourg (FR)
(72) Erfinder: Vigreux, Daniel, F-57400 Sarrebourg (FR)
(74) Vertreter: Glawe, Delfs, Moll & Partner

(56) Entgegenhaltungen:
- CH-A- 541 058
- CH-A- 541 058
- DE-A- 3 626 451
- DE-A- 3 626 451
- FR-A- 2 129 405

## Beschreibung

Die Erfindung betrifft einen Beschlag von der im Oberbegriff des Anspruchs 1 angegebenen Art. Ein derartiger Beschlag ist aus CH-A-05 41 058 bekannt. Er kann in einer beidseitigen hinterschnittenen Nut z.B. eines Fenster- oder Türrahmens an beliebiger Stelle festgelegt werden. Der vorbekannte Beschlag ist als Schanierband ausgebildet, BeSchläge dieser Art können aber auch für andere Beschlagfunktionen, z.B. als Schließblech für das Zusammenwirken mit einem Riegelelement ausgestaltet sein.

Bei der Montage des vorbekannten Beschlages muß zuerst das Klemmteil gesondert in die Profilnut eingesetzt und dort festgehalten werden, bis in einem zweiten Arbeitsschritt das Beschlagsteil aufgesetzt und durch eine Schraube mit dem Klemmteil verbunden wird. Die die Nut begrenzenden Stege müssen verhältnismäßig kräftig bemessen und relativ kurz sein, damit sie die beim Festziehen der Schrauben auftretenden quergerichteten Kräfte aufnehmen können.

Aus DE-A-36 26 451 ist ein Beschlag ähnlicher Art bekannt, bei dem aber nur das Klemmteil eine Nase für das Hintergreifen der einen Nuthinterschneidung aufweist. Der Fußabschnitt des Befestigungsteils hat keine Nase, und die Festlegung des Beschlagteils in der Nut wird nur dadurch erreicht, daß eine abgewinkelte Fortsetzung des Beschlagteiles an der Außenseite des von der Nase des Klemmteils hintergriffenen Nutsteges anliegt und als Wiederlager für die Nase des Klemmteils dient. Dieser Beschlag kann, zwar da er nur einseitig mit einer Nase versehen ist, frontal in die Nut eingesetzt werden, wobei seine an der Außenseite des einen Nutsteges anliegende winkelförmige Fortsetzung als Referenz- und Führungsfläche für das Einführen des Klemmteils in die Nut dient. Die hieraus bekannte Art der Beschlagbefestigung ist bei Beschlägen, die eine an der Nutaußenseite anliegende winkelförmige Fortsetzung nicht aufweisen, nicht anwendbar.

Aus FR-A-21 29 405 ist ein Beschlag bekannt, dessen mit zwei abstehenden Nasen versehener Fußabschnitt in Längsrichtung in die hinterschnittene Nut eingeführt werden muß. Die Beschläge von Fenstern oder Türen, bei denen üblicherweise die Rahmennuten an den Enden geschlossen sind, ist diese Konstruktion daher nicht anwendbar. Die Festlegung des bekannten Beschlages in der Nut erfolgt durch Klemmschrauben, deren Köpfe die Nuthinterschneidungen hintergreifen. Der Beschlag sitzt mit zwei seitlichen, an der Unterseite abgeschrägten Vorsprüngen auf den abgeschrägten Nutstegen auf, so daß diese gegen Auseinanderspreizen abgestützt sind.

Aus AT-B-373 965 ist ein Beschlag bekannt, dessen auf der Nut aufsitzendes Befestigungsteil gegen einen in die Nut eingeführten Nutenstein festgezogen wird. Da dieser beide Nuthinterschneidungen untergreift, kann er nicht durch Nutöffnung, sonder nur längs der Nut eingeführt werden, was die Montage erschwert.

DE-U-19 16 076 zeigt einen Beschlag, der in einer einseitig hinterschnittenen Nut durch ein getrenntes, in Längsrichtung der Nut einführbares Füllstück festgelegt wird. Bei einem aus DE-U-91 10 175 bekannten Beschlag ist ein Klemmteil am Befestigungsteil unverlierbar schwenkbar gelagert und wird mittels einer Schraube in die Klemmstellung abgespreizt.

Der Erfindung liegt die Aufgabe zugrunde, einen Beschlag der genannten Art so auszubilden, daß er einerseits vom Monteur sicher und einfach in die Nut eingesetzt und festgelegt werden kann und andererseits durch Anziehen der Schrauben in der Nut mit großer Klemmkraft festgelegt werden kann, ohne daß die Befestigungskraft zu einer Deformierung der Nutwände führt.

Die vorgenannte Aufgabe wird durch die kennzeichnenden Merkmale des Anspruchs 1 gelöst. Anspruch 2 bezieht sich auf eine weitere vorteilhafte Ausgestaltung.

Das erfindungsgemäße Beschlagteil wird durch Hintergreifen beider Nuthinterschneidungen sicher in der Profilnut gehalten. Damit die Klemmkräfte des Beschlages nicht zu einem Aufspreizen der Nut, und damit zu einem Lockern des Beschlages führen können, sind beide Nutränder durch das Beschlagteil selbst umgriffen und gegen Aufspreizen abgestützt. Die zusammenwirkenden Führungsflächen des Befestigungsteils und Klemmteils sind derart profiliert, daß zu Beginn des Anziehens der Schrauben eine sehr starke Querbewegung des Klemmteils erzwungen wird, die gleich zu Anfang ein sicheres Untergreifen der Nuthinterschneidungen durch die Nasen von Klemmteilen und Befestigungsteilen bewirkt; erst im weiteren Verlauf werden dann die Nasen gegen die Nuthinterschneidungen festgezogen.

Eine Ausführungsform der Erfindung wird anhand der Zeichnungen näher erläutert. Es zeigt:
- Fig. 1 und Fig. 2: die beiden Teile des Beschlags in Seitenansicht und im Schnitt;
- Fig. 3: das Befestigungsteil von Fig. 1 und 2 in der Ansicht von unten;
- Fig. 4: das Klemmteil von Fig. 1 und 2 in der Ansicht von oben;
- Fig. 5: eine perspektivische Ansicht der beiden Teile des Beschlags;
- Fig. 6 und Fig. 7: den Beschlag beim Einführen in eine Nut, jeweils im Schnitt nach der Linie A-A bzw. B-B von Fig. 1;
- Fig. 8 und Fig. 9: den in der Nut befestigten Beschlag, ebenfalls im Schnitt nach der Linie A-A bzw. B-B von Fig. 1;
- Fig. 10: eine vergrößerte Darstellung des Profils der Führungsflächen;
- Fig. 11: einen Schnitt durch eine geänderte Ausführungsform des Beschlags für eine flache Nut.

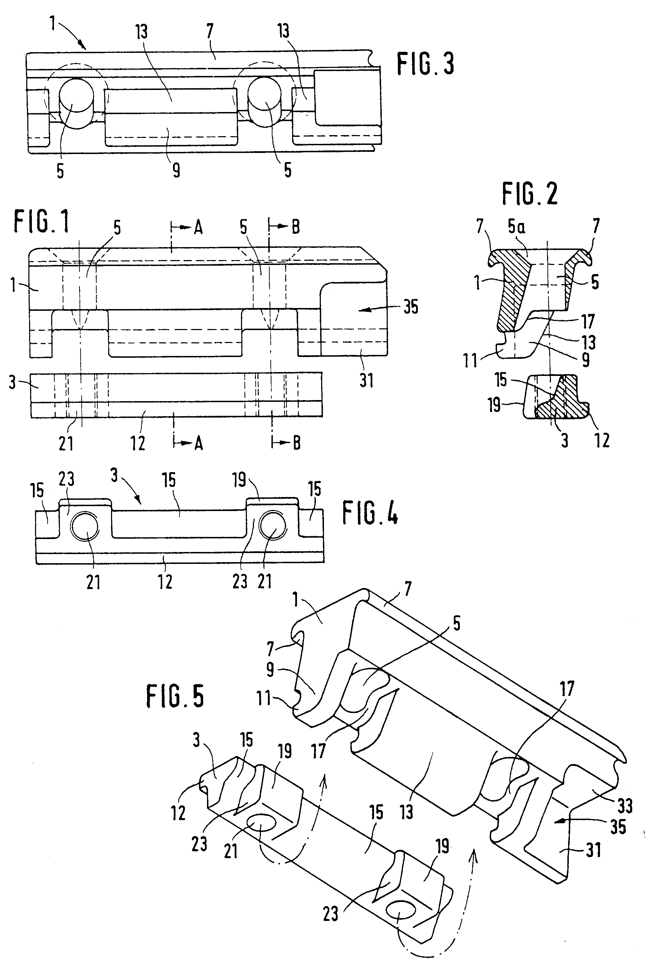

Der in Fig. 1-5 dargestellte Beschlag hat insgesamt eine längliche Form und erstreckt sich bei Gebrauch in Längsrichtung der Nut, in der er befestigt werden soll.

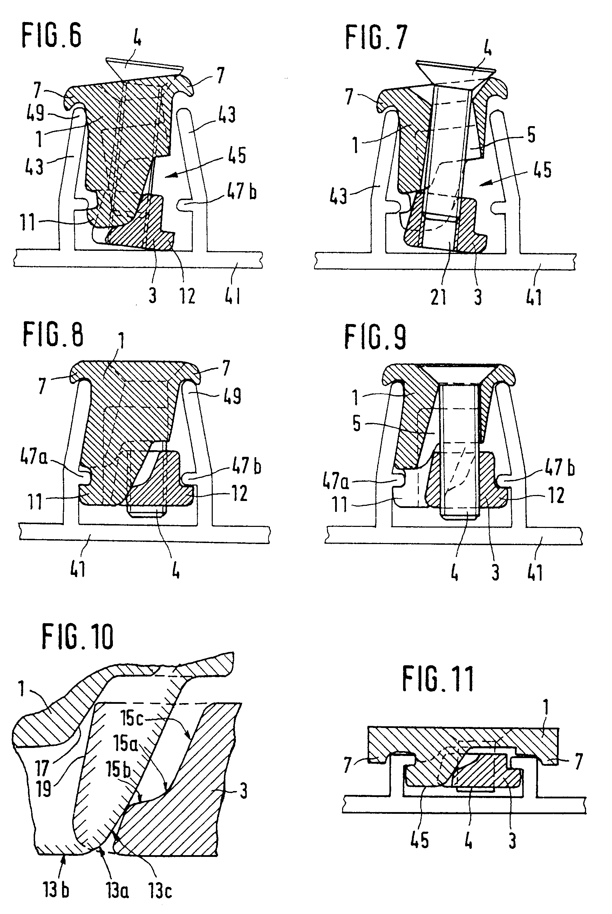

Der Beschlag besteht aus dem Befestigungsteil 1, dem Klemmteil 3 und zwei Schrauben 4 (siehe Fig. 7 und 9; in Fig. 1-5 nicht dargestellt), mit denen die Teile 1 und 3 abstandsveränderlich verbunden sind. In Fig. 2 ist das Befestigungsteil 1 im Schnitt nach der Linie B-B dargestellt, und man erkennt, daß es je eine Bohrung 5 zur Aufnahme einer Schraube aufweist, wobei die Bohrung 5 im oberen Bereich rund ist und z.B. eine Ansenkung 5a aufweisen kann, und nach unten zunehmend die Form eines Langlochs einnimmt, so daß eine in der Bohrung 5 eingesetzte Schraube 4 beschränkt in Querrichtung schwenkbar ist. Das Befestigungsteil 1 hat ferner zwei seitlich abstehende hakenförmige Vorsprünge 7, welche die Ränder einer Nut umgreifen und abstützen können, wie noch erläutert wird. Das Befestigungsteil 1 hat ferner einen Fußabschnitt 9, der in die Nut eingreift und eine seitlich abstehende Nase 11 für das Hintergreifen einer der beiden Nuthinterschneidungen aufweist.

Das Klemmteil 3 ist in Fig. 2 im Schnitt nach der Linie A-A dargestellt, also außerhalb der Gewindebohrungen 21 für die Schrauben 4, und es weist eine seitlich vorspringende Nase 12 für das Hintergreifen der anderen Nuthinterschneidung auf.

Der Fußabschnitt 9 des Befestigungsteils 1 weist eine schräge Führungsfläche 13 auf, die mit einer konkav-konvex gebogenen Führungsfläche 15 des Klemmteils 3 zusammenwirkt, wie noch erläutert wird. Wie am besten aus Fig. 1 und 5 ersichtlich, ist der Fußabschnitt 9 im Bereich der beiden Schraubenbohrungen 5 unterbrochen, und in diesem Bereich sind schräg ansteigende Führungsflächen 17 ausgebildet. Diese wirken mit Führungsflächen 19 zusammen, die am Klemmteil 3 ausgebildet sind, und zwar an vorspringenden Teilen 23, die in die Unterbrechungen des Fußabschnittes 9 des Befestigungsteils 1 passen und mit Gewindebohrungen 21 zur Aufnahme der Schrauben versehen sind.

In Fig. 5 ist das Klemmteil 3 um 180°gegenüber seiner Stellung nach Fig. 1 gedreht dargestellt, um das Profil seiner Oberseite sichtbar zu machen, die normalerweise dem Befestigungsteil 1 zugewendet ist. Beim Zusammenbau der beiden Teile wird das Klemmteil 3 entsprechend den Pfeilen C gewendet, so daß seine Führungsflächen 15,19 mit den entsprechenden Führungsflächen 13,15 des Befestigungsteils 1 zusammenwirken.

Der Beschlag gemäß der dargestellten Ausführungsform ist zur Verwendung als Schließblech z.B. für Schiebetüren bestimmt. Zu diesem Zweck weist das Befestigungsteil 1 an seinem einen Ende eine durch eine Seitenwandung 31 und eine Deckwandung 33 begrenzte Ausnehmung 35 auf, in die ein verschiebbarer Riegel (nicht dargestellt) eines Verriegelungsbeschlages eingreifen kann, um einen beweglichen Flügelrahmen z. B. einer Schiebetür an einem feststehenden Rahmen zu verriegeln. Prinzipiell ist aber die Funktion des Beschlages für die vorliegende Erfindung unwesentlich, da diese nur die Art der Klemmbefestigung des Beschlages in der Nut betrifft.

Wie aus der vorstehenden Beschreibung und insbesondere aus Fig. 10 ersichtlich, weisen das Befestigungsteil 1 und das Klemmteil 3 zwei Paare von zusammenwirkenden Führungsflächen 13, 15 und 17, 19 auf, die in Querrichtung des Beschlages gegeneinander versetzt angeordnet sind. Dabei ist insbesondere die Führungsfläche 15 des Klemmteils 3 derart bei 15a konkav gekrümmt und die Führungsfläche 13 des Befestigungsteils 1 an ihrem Ende bei 13a derart konvex gekrümmt, daß diese Führungsflächen Abschnitte 13b,15b aufweisen, die unter weniger als 45° zur Achse der Schrauben geneigt sind, und andererseits auch Abschnitte 13c,15c, die unter mehr als 45° zu dieser Achse geneigt sind. Das Zusammenwirken der Führungsflächen beim Einsetzen und Befestigen des Beschlages in einer hinterschnittenen Nut wird anhand von Fig. 6-9 näher erläutert.

In Fig. 6-9 ist mit 41 ein z. B. feststehender Rahmen eines Fensters oder einer Tür angedeutet, an dem zwei Flansche 43 angeformt sind, die eine Nut 45 begrenzen. Von den Flanschen 43 nach innen vorspringende Stege 47a, 47b bilden je eine Nuthinterschneidung auf jeder Seite der Nut.

Wenn die das Befestigungsteil 1 mit dem Klemmteil 3 verbindenden Schrauben 4 ausreichend gelockert sind, ist das Klemmteil 3 vom Befestigungsteil soweit entfernt, daß die konvexe Rundung am Ende der Führungsfläche 13 des Befestigungsteils 1 der konkaven Rundung der Führungsfläche 15 des Klemmteils 3 gegenüber steht, und das Klemmteil 3 kann in Querrichtung relativ zum Befestigungsteil 1 bewegt werden, bis es in die in Fig. 6 dargestellte Einführstellung gelangt, in der die Führungsflächen 13, 15 aneinander anliegen. In dieser Stellung ist die von den Nasen 11, 12 des Befestigungsteils 1 und des Klemmteils 3 definierte Breite kleiner als die lichte Breite zwischen den Nuthinterschneidungen 47, so daß der gesamte Beschlag frontal in die Nut 45 hineinbewegt werden kann, wie in Fig. 6 und 7 dargestellt, bis das Klemmteil 3 auf dem Boden der Nut und/oder einer der Vorsprünge 7 auf der Nutkante 49 aufsitzt. Diese Stellung bietet die Gewähr, daß die Nase 11 mit Sicherheit den Steg 47a untergreift.

Wenn nach dem hinführen des Beschlages die Schrauben 4 festgezogen werden, sind zunächst die unter mehr als 45° zur Schraubenachse geneigten Bereiche 13b,15b der Führungsflächen 13 und 15 wirksam, so daß das Klemmteil 3 anfänglich sehr stark in Querrichtung gegenüber dem Befestigungsteil 1 verschoben wird. Hierdurch werden sehr rasch die Nasen 11 und 13 unter die Nuthinterschneidungen 47a,47b gebracht, der Beschlag kann dann nicht mehr aus der Nut herausgewegt werden. Beim weiteren Anziehen der Schrauben 4 gelangen die steiler geneigten Bereiche 13c,15c der Führungsflächen 13 und 15 zur Anlage aneinander, und gleichzeitig kommt auch die Führungsfläche 17 des Befestigungsteils 1 an der Führungsfläche 19 des Klemmteils zur Anlage. Hierdurch wird bei weiterem Anziehen der Schrauben das Klemmteil 3 mit geringerer Geschwindigkeit, aber sehr großer Kraft gegenüber dem Befestigungsteil 1 nach außen gedrückt, und dadurch der gesamte Beschlag hinter den Nuthinterschneidungen 47a, 47b verspannt. Gleichzeitig kommen die hakenförmigen seitlichen Vorsprünge 7 zur Anlage an den Rändern 49 der die Nut begrenzenden Flansche 43, wodurch diese von außen umgriffen und abgestützt werden. Die beim Festziehen der Schrauben 4 durch das Befestigungsteil 1 und Klemmteil 3 auf die Nuthinterschneidungen 47 ausgeübten Querkräfte können daher nicht zu einem Aufweiten der Nut führen. Dies ist besonders wichtig bei Rahmenprofilen aus einem nicht sehr verformungsfesten Material wie Aluminium.

Das Vorhandensein von zwei Paaren von zusammenwirkenden Führungsflächen 13 und 15 bzw. 17 und 19, die in Querrichtung gegeneinander versetzt sind, hat die wichtige Folge, daß das Befestigungsteil 1 und Klemmteil 3 in jeder Stellung immer an zwei Berührungspunkten (genauer gesagt Berührungslinien) aneinander abgestützt sind. Das Klemmteil 3 kann deshalb nicht dazu neigen, sich um eine Berührungslinie relativ zum Befestigungsteil zu drehen. Die Vorsprünge 23 des Klemmteils 3, die in die Unterbrechungen des Fußteils 9 des Befestigungsteils eingreifen, bewirken eine zusätzliche Führung, d.h. sie verhindern Relativverschiebungen der Teile 1 und 3 in Längsrichtung. Diese Maßnahmen tragen dazu bei, das Klemmteil am Befestigungsteil in jeder Stellung der Schrauben 4 definiert festzulegen, so daß für den Anwender die Sicherheit besteht, daß der Beschlag einwandfrei in die Nut 45 eingeführt werden kann und die Nasen 11,12 die Nutstege 47a, 47b auch ordnungsgemäß hintergreifen, und zwar auch dann, wenn die Nut stellenweise deformiert oder unterbrochen ist.

Die Abmessungen der Teile 1 und 3 des Beschlages sind selbstverständlich an die Abmessungen der Nut 45 angepaßt. Der erfindungsgemäße Beschlag ist jedoch nicht auf die Verwendung bei Nuten mit besonders hohen Nutwänden 43 beschränkt (obwohl bei diesen die Gefahr der seitlichen Verformung am größten ist). Der Beschlag kann auch in vorteilhafter Weise bei Rahmenprofilen mit besonders flacher Nut verwendet werden, wenn er entsprechend angepaßt wird, wie in Fig. 11 schematisch gezeigt.

## Patentansprüche

1. Beschlag zur Befestigung in einer beiderseits hinterschnittenen Profilnut eines Rahmens,
bestehend aus einem auf die Nutränder aufsetzbaren Befestigungsteil (1), das einen für den Eingriff in die Profilnut ausgebildeten Fußabschnitt (9) mit seitlich abstehender Nase (11) aufweist,
und einem am Befestigungsteil (1) mittels mindestens einer Schraube (4) abstandsveränderlich gelagerten Klemmteil (3) mit seitlich abstehender Nase (12), wobei am Befestigungsteil (1) und am Klemmteil (3) zusammenwirkende, geneigte Führungsflächen (13, 15; 17, 19) ausgebildet sind, die beim Anziehen der Schrauben (4) eine Querbewegung des Klemmteils in eine Klemmstellung (3) relativ zum Befestigungsteil (1) bewirken, derart, daß im montierten Zustand die Nasen (11, 12) die beiden Nuthinterschneidungen hintergreifen,
dadurch **gekennzeichnet,** daß die oder jede Schraube (4) am Befestigungsteil (1) derart in Querrichtung schwenkbar ist, daß das Klemmteil (3) bei gelockerten Schrauben (4) relativ zum Befestigungsteil (1) querverschieblich ist bis in eine Einführstellung, in der die von den Nasen (11, 12) definierte Breite kleiner als die lichte Breite der Profilnut ist und das Klemmteil (3) und der Fußabschnitt (9) frontal in die Nut einführbar sind und daß am Befestigungsteil (1) zwei seitliche Vorsprünge (7) ausgebildet sind, die im montierten Zustand des Beschlages die beiden Nutränder (49) der Profilnut von außen umgreifen und gegen Aufspreizen abstützen.

2. Beschlag nach Anspruch 1, dadurch **gekennzeichnet**, daß die Führungsflächen (13,15) des Befestigungsteils (1) und des Klemmteils (3) Abschnitte (13b,15b) aufweisen, die in der Einführstellung des Klemmteils aneinander anliegen und unter mehr als 45° zur Schraubenachse geneigt sind und mit konkaver bzw. konvexer Krümmung (13a,15a) in anschließende Abschnitte (13c,15c) übergehen, die im weiteren Verlauf des Anziehens der Schrauben aneinander zur Anlage kommen und unter weniger als 45° zur Schraubenachse geneigt sind.

3. Beschlag nach Anspruch 1 oder 2, dadurch **gekennzeichnet,** daß am Klemmteil und am Befestigungsteil je zwei Paare (13,15;17,19) von zusammenwirkenden Führungsflächen ausgebildet sind, die in Querrichtung zueinander versetzt angeordnet sind.

## Claims

1. A fixture for fastening in a profile groove of a frame undercut on both sides, comprising a fastening member (1) which can be mounted on the groove edges and which has a base portion (9) designed for engagement into the profile groove and having a laterally protruding projection (11), and comprising a clamping member (3) which is mounted so as to be adjustably spaced on the fastening member (1) by means of at least one screw (4) and which has a laterally protruding projection (12), wherein co-operating, inclined guide surfaces (13, 15; 17, 19) are formed on the fastening member (1) and on the clamping member (3), which guide surfaces, when the screws (4) are tightened, induce a transverse movement of the clamping member (3) into a clamping position relative to the fastening member (1) in such a way that in the installed condition the projections (11, 12) engage behind the two groove undercuts,
characterised in that the or each screw (4) is pivotable on the fastening member (1) in such a way in transverse direction that, when the screws (4) are slackened, the clamping member (3) is transversely displaceable relative to the fastening member (1) into an insertion position, in which the width defined by the projections (11, 12) is smaller than the unobstructed width of the profile groove, and the clamping member (3) and the base portion (9) can be inserted frontally into the groove, and in that two lateral projections (7) are formed on the fastening member (1), which in the installed condition of the fixture outwardly embrace the two groove edges (49) of the profile groove and brace them against expansion.

2. A fixture according to Claim 1, characterised in that the guide surfaces (13, 15) of the fastening member (1) and of the clamping member (3) have portions (13b, 15b) which abut against one another in the insertion position of the clamping member and are inclined at more than 45° to the screw axis and merge with a concave or convex curvature (13a, 15a) into adjoining portions (13c, 15c) which in the course of further tightening of the screws come into abutment with one another and are inclined at less than 45° to the screw axis.

3. A fixture according to Claim 1 or 2, characterised in that two pairs (13, 15; 17, 19) of respectively co-operating guide surfaces are formed on the clamping member and on the fastening member, which guide surfaces are disposed offset relative to one another in transverse direction.

## Revendications

1. Ferrure pour fixation dans une rainure d'un profilé, rétréci des deux côtés, d'un cadre,
composée d'un élément de fixation (1) pouvant être placé sur les bords de rainure et présentant une partie de pied (9) avec un nez (11) en saillie latérale, réalisée pour s'engager dans la rainure du profilé,
et un élément de serrage (3) avec un nez (12) en saillie latérale, monté à une distance variable sur l'élément de fixation à l'aide d'au moins une vis (4), sur l'élément de fixation (1) et sur l'élément de serrage (3) étant formées des surfaces de guidage (13, 15; 17, 19) inclinées coopérantes qui, lors du vissage des vis (4), entraînent un déplacement transversal de l'élément de serrage (3), vers une position de serrage, par rapport à l'élément de fixation (1), de telle sorte que, à l'état monté, les nez (11, 12) viennent en prise derrière les deux rétrécissements de rainure,
caractérisée en ce que la ou chaque vis (4) dans l'élément de fixation (1) est pivotable dans le sens transversal de telle manière que l'élément de serrage (3) est déplaçable, lorsque les vis (4) sont desserrées, transversalement par rapport à l'élément de fixation (1), jusqu'à une position d'engagement dans laquelle la largeur définie par les nez (11, 12) est plus petite que la largeur nominale de la rainure du profilé et l'élément de serrage (3) et la partie de pied (9) peuvent être engagés frontalement dans la rainure et en ce que sur l'élément de fixation (1) sont formées deux saillies latérales (7) qui, à l'état monté de la ferrure, viennent en prise, de l'extérieur, autour des deux bords de rainure (49) de la rainure du profilé et empêchent l'écartement de ceux-ci.

2. Ferrure suivant la revendication 1, caractérisée en ce que les faces de guidage (13, 15) de l'élément de fixation (1) et de l'élément de serrage (3) présentent des parties (13b, 15b) qui, en position d'engagement de l'élément de serrage, s'appuient l'une contre l'autre et sont inclinées de plus de 45° par rapport à l'axe des vis et passent, par une courbure (13a, 15a) concave ou convexe, respectivement, en des parties successives qui viennent à s'appuyer l'une contre l'autre, lorsque les vis sont davantages vissées, et sont inclinées de moins de 45° par rapport à l'axe des vis.

3. Ferrure suivant la revendication 1 ou 2, caractérisée en ce que sur chacun de l'élément de serrage et de l'élément de fixation sont formées deux paires (13, 17; 17,19) de surfaces de guidage coopérantes qui sont disposées décalées l'une par rapport à l'autre dans le sens transversal.
